# EUROPÄISCHE PATENTANMELDUNG

(11) **EP 3 590 612 A1**
(43) Veröffentlichungstag der Anmeldung: **08.01.2020**
(21) Anmeldenummer: 18181988.9
(22) Anmeldetag: 05.07.2018
(51) Int. Cl.: B07C 5/342

(54) **VERFAHREN UND VORRICHTUNG ZUM MANAGEMENT VON EINHEITEN EINES SCHÜTTGUTES SOWIE COMPUTERPROGRAMM**

(71) Anmelder: Siemens Aktiengesellschaft, 80333 München (DE)
(72) Erfinder: Dirscherl, Christian, 91074 Herzogenaurach (DE); Fodor, Dan Niculae, 91227 Leinburg-Entenberg (DE); Hellmuth, Torsten, 91058 Erlangen (DE); Titz, Holger, 91058 Erlangen (DE)

(57) **Zusammenfassung**

Die Erfindung betrifft ein Verfahren und eine Vorrichtung zum Management von Einheiten (a, b, c) eines Schüttgutes (1) sowie ein Computerprogramm. Das Verfahren zum Management von Einheiten (a, b, c) des Schüttgutes (1) umfasst die folgenden Schritte:
- Ermitteln einer Materialeigenschaft (X) der jeweiligen Einheit (a, b, c), insbesondere auf einer Fördereinrichtung (11),
- Hinterlegen eines Eintrages für die jeweilige Einheit (a, b, c) mit der jeweiligen Materialeigenschaft (X) der Einheit (a, b, c) und der Position der jeweiligen Einheit (a, b, c) in einer Datenbank (8),
weiter aufweisend zumindest einen der folgenden Schritte:
- Ermitteln eines nachgelagerten Transportweges der jeweiligen Einheit (a, b, c) auf Grundlage des jeweiligen Eintrages in der Datenbank (8),
- Anpassen einer nachfolgenden Bearbeitung der jeweiligen Einheit (a, b, c) auf Grundlage der Materialeigenschaft (X) der Einheit (a, b, c),
- falls die jeweilige Einheit (a, b, c) einer Lagerstätte (5) zugeführt wird, erstellen einer virtuellen Nachbildung (6) der Lagerstätte (5), wobei eine Position der jeweiligen Einheit (a, b, c) mit der jeweiligen Materialeigenschaft (X) in der Datenbank (8) hinterlegt wird.

## Beschreibung

Die Erfindung betrifft ein Verfahren und eine Vorrichtung zum Management von Schüttgut. Weiter betrifft die Erfindung ein Computerprogramm.

Schüttgut wird in der Regel von einer Mine mit einer Fördereinrichtung zur weiteren Bearbeitung, wie der Verhüttung, zumindest bereichsweise mit einer Fördereinrichtung transportiert. Oft wird das Schüttgut auf einer Lagerstätte, insbesondere einer Halde, zwischengelagert.

Zur verbesserten Bearbeitung erfolgt vorzugsweise eine Analyse des Schüttgutes. In der Regel erfolgt die Analyse des Schüttgutes Proben-basiert mit Hilfe von Laboranalysen. In einer solchen Laboranalyse kann beispielsweise der Metallgehalt eines Erzes oder der Aschegehalt von Braunkohle bestimmt werden.

Moderne Anwendungen lassen eine Analyse von Schüttgut direkt auf der Fördereinrichtung zu. Eine solche Analyse erfolgt beispielhaft mit Hilfe von Röntgenstrahlung. Das Dokument US 8,878,090 B2 beschreibt eine solche Analyse von Schüttgut auf einem Förderband.

Bisher dient eine solche Analyse vorwiegend zum langsamen Sortieren von Schüttgut.

Lösungen aus dem bisherigen Stand der Technik sind jedoch zum Einsatz in einer Erz-Mine, insbesondere einer Kupfer-Mine, aufgrund des hohen Durchsatzes im Bereich von einigen Tonnen pro Minute des Schüttgutes nur bedingt geeignet.

Weiter umfasst der Stand der Technik Methoden zur Ansteuerung eines Schaufelradbaggers zum Aufhalden (Beladen) oder Abhalden (Entladen) einer Halde. Anhand der aufgehaldeten Menge des Schüttgutes kann mit Hilfe eines mathematischen Modells ein Profil der Oberfläche der Halde bestimmt werden. Durch das Profil der Oberfläche kann der Schaufelradbagger bei den Abhalden des Schüttgutes so gesteuert werden, dass er das Schüttgut vom Rand der Halde aufnimmt. Ein solches System wird beispielhaft in DE 197 37 858 A1 beschrieben.

Nachteilhaft ist es bisher nur bedingt möglich, ein zeitnahes Management des Schüttgutes auf dem Weg vom Ort der Entstehung (der Mine) bis zum Ort der Bearbeitung (z.B. Hochofen) durchzuführen.

Daher ist es Aufgabe der Erfindung, eine Möglichkeit zum Management des Schüttgutes bereitzustellen. Insbesondere ist es Aufgabe der Erfindung, das Management von Schüttgut in Echtzeit zu ermöglichen.

Die Aufgabe wird durch ein Verfahren nach Anspruch 1 gelöst. Weiter wird die Aufgabe durch eine Vorrichtung nach Anspruch 15 gelöst. Schließlich wird die Aufgabe durch ein Computerprogrammprodukt gemäß Anspruch 14 gelöst.

Vorteilhafte Ausgestaltungen und Weiterbildungen der Erfindung sind jeweils Gegenstand der abhängigen Ansprüche.

Das Verfahren zum Management von Einheiten eines Schüttgutes umfasst die folgenden Schritte:
- Ermitteln einer Materialeigenschaft der jeweiligen Einheit, insbesondere auf einer Fördereinrichtung,
- Hinterlegen eines Eintrages für die jeweilige Einheit mit der jeweiligen Materialeigenschaft der Einheit und der Position der jeweiligen Einheit in einer Datenbank.

Weiter weist das Verfahren zumindest einen der folgenden Schritte auf:
- Ermitteln eines nachgelagerten Transportweges der jeweiligen Einheit des Schüttgutes auf Grundlage des jeweiligen Eintrages in der Datenbank;
- Anpassen einer nachfolgenden Bearbeitung der jeweiligen Einheit auf Grundlage der Materialeigenschaft der Einheit;
- falls die jeweilige Einheit einer Lagerstätte zugeführt wird, erstellen einer virtuellen Nachbildung der Lagerstätte, wobei eine Position der jeweiligen Einheit mit der jeweiligen Materialeigenschaft in der Datenbank hinterlegt wird.

Unter einer Einheit eines Schüttgutes wird vorzugsweise eine vorgebbare Menge eines Schüttgutes verstanden. Beispielhaft kann eine Einheit eine Tonne des Schüttgutes, eine festgelegte Distanz auf einem Förderband, eine Ladung eines Bergbau-lastwagens oder ein Volumen, beispielhaft einem Kubikmeter, sein.

Unter einer Materialeigenschaft wird insbesondere der Erzgehalt eines Gesteins, ein Metallgehalt eines Erzes, ein Aschegehalt einer Kohle oder ein Brennwert einer Kohle verstanden. Zusätzlich kann unter der Materialeigenschaft die Härte oder die Korngröße des Schüttgutes verstanden werden. Die Materialeigenschaft wird vorzugsweise mit Hilfe einer Analyseeinrichtung bereitgestellt.

Unter einer Datenbank wird eine Zusammenstellung von Einträgen verstanden, wobei eine Einheit des Schüttgutes vorzugsweisen jeweils einem Eintrag entspricht. Der Eintrag des jeweiligen Eintrages umfasst die Materialeigenschaft und die Position der jeweiligen Einheit. Optional wird die jeweilige Einheit nummeriert. Vorzugsweise wird die Position der Einheit regelmäßig aktualisiert. Es kann auch eine Kalibrierung der Analyseeinrichtung oder eine mögliche Abweichung der Materialeigenschaft den jeweiligen Eintrag der Datenbank ergänzen.

Unter einer Lagerstätte wird insbesondere ein Silo, eine Halde oder eine sonstige Lagerstätte für Schüttgut verstanden.

Unter einer Fördereinrichtung wird insbesondere ein Förderband, ein Gurtförderer, ein Eisenbahnzug oder ein Bergbau-Lastwagen verstanden.

Unter einem Management von Einheiten des Schüttgutes werden vorzugsweise eine Bewertung und/oder eine Nachverfolgung der jeweiligen Einheit verstanden. Unter einer Bewertung der jeweiligen Einheit wird die Zuweisung der Materialeigenschaft oder einer von der Materialeigenschaft abgeleiteten Größe zu der jeweiligen Einheit verstanden. Durch die Zuordnung der Materialeigenschaft zu der jeweiligen Einheit erfolgt die Bewertung vorzugsweise derart, dass ein hoher Metallgehalt oder Erzgehalt der jeweiligen Einheit eine gute Bewertung zur Folge hat. Unter einem Nachverfolgen der jeweiligen Einheit wird vorzugsweise ein regelmäßiges Update der Datenbank verstanden. So kann die momentane Position der jeweiligen Einheit mit Hilfe der Datenbank ermittelt werden. Vorzugsweise erfolgt das Nachverfolgen der jeweiligen Einheit mit Hilfe einer virtuellen Nachbildung der Fördereinrichtung und/oder mit Hilfe der Datenbank.

Unter einem Transportweg wird vorzugsweise verstanden, zwischen welchen Positionen das Schüttgut transportiert wird. Unter einem nachgelagerten Transportweg wird verstanden, auf welchem Weg die jeweilige Einheit, insbesondere mit Hilfe der Fördereinrichtung, nach der Analyseeinrichtung transportiert wird.

Unter einer virtuellen Nachbildung der Lagerstätte wird vorzugsweise verstanden, dass die Position der jeweiligen Einheit in der Lagerstätte in der Datenbank hinterlegt wird. Vorzugsweise erfolgt die virtuelle Nachbildung der Lagerstätte in zumindest einem Teil der Datenbank. Vorzugsweise umfasst die virtuelle Nachbildung der Lagerstätte auch die Materialeigenschaft der jeweiligen Einheit.

Unter einer Verarbeitung des Schüttgutes wird ein weiteres Mahlen des Schüttgutes, eine Flotation, eine Verfeuerung eines Brennstoffes, wie Kohle, oder eine Verhüttung eines Erzes verstanden. Alternativ kann auch die Verladung der jeweiligen Einheit auf ein Schiff oder einen Eisenbahnwagon einer weiteren Verarbeitung entsprechen.

Das Schüttgut wird vorzugsweise von einer ersten Position zu einer zweiten Position auf der Fördereinrichtung nachverfolgt.

Die Fördereinrichtung dient beispielhaft zum Transport des Schüttgutes von der Gewinnung oder einer Lagerstätte (erste Position) bis zur weiteren Verarbeitung des Schüttgutes oder einer anderen Lagerstätte (zweite Position).

Die Datenbank dient zur Zusammenstellung der Einträge, wobei vorzugsweise der jeweiligen Einheit ein Eintrag zugeordnet ist. Anhand der Datenbank kann der Transportweg und/oder die Position der jeweiligen Einheit ermittelt werden.

Die Bestimmung der Materialeigenschaft erfolgt vorzugsweise mit Hilfe einer ersten Analyseeinrichtung, wobei die erste Analyseeinrichtung im Bereich der Fördereinrichtung positioniert wird. Die Bestimmung der Materialeigenschaft erfolgt vorzugsweise berührungslos. Die Bestimmung der Materialeigenschaft erfolgt vorteilhaft derart, dass die jeweilige Einheit auf der Fördereinrichtung verbleiben kann und der Transport der Einheit auf der Fördereinrichtung nicht unterbrochen wird.

Durch das Management der Einheit kann geplant und ausgewertet werden, wo eine Einheit gelagert wird oder wie die Einheit weiter verarbeitet wird.

Vorzugsweise erfolgt ein Abbau des Schüttgutes in einer Mine. Das Schüttgut, welches in der Mine abgebaut wird, wird mit einer Mühle grob gemahlen. Das grob gemahlene Schüttgut wird vorzugsweise mit Hilfe der Fördereinrichtung der weiteren Verarbeitung oder einer Lagerstätte zur zeitweiligen Lagerung zugeführt. Vorzugsweise ist die erste Analyseeinrichtung nach der Mühle positioniert. Insbesondere zur zeitweisen Lagerung des Schüttgutes wird das Schüttgut in einer Lagerstätte abgelegt. Alternativ können Einheiten, die als nicht weiter verwendbar bewertet worden sind, einer Halde zugeführt werden. Solche Einheiten weisen beispielhaft einen besonders geringen Erzgehalt oder besonders viele störende Mineralien auf.

Ein Abbilden der jeweiligen Einheit in der Datenbank erfolgt vorzugsweise derart, dass die jeweilige Einheit mit der ermittelten Materialeigenschaft und der Position der Einheit, insbesondere als Funktion der Zeit, einem Eintrag in der Datenbank entspricht.

Vorzugsweise ist die Datenbank derart ausgebildet, dass die Position der jeweiligen Einheit in der Datenbank, vorzugsweise als Funktion der Zeit, dem jeweiligen Eintrag zuordenbar ist.

Anhand der Datenbank kann die weitere Bearbeitung des Schüttgutes oder die Beladung des Schüttgutes, beispielhaft auf ein Schiff, anhand der Materialeigenschaft der jeweils zu bearbeitenden Einheit angepasst werden.

Vorzugsweise erfolgt die Analyse des Schüttgutes mit Hilfe von Röntgenstrahlen, mit UV-sichtbarem- und/oder IR-Licht. Alternativ kann eine Analyse des Schüttgutes anhand einer radiometrischen Bestimmung erfolgen.

Vorzugsweise wird die jeweilige Einheit auf der Fördereinrichtung und/oder in der Lagerstätte dann als Eintrag in die Datenbank aufgenommen, sobald die Materialeigenschaft zuordenbar ist. Vorzugsweise umfasst der jeweilige Eintrag die Position als Funktion der Zeit.

Die Funktion der Zeit wird vorzugsweise durch die Geschwindigkeit der Fördereinrichtung bestimmt.

Vorzugsweise wird der nachgelagerte Transportweg anhand der Bewertung der jeweiligen Einheit festgelegt.

Mit Hilfe der Datenbank kann das Nachverfolgen der jeweiligen Einheit des Schüttgutes erfolgen. Hierfür wird beispielhaft die jeweilige Einheit mit dem Ort der jeweiligen Einheit auf der Fördereinrichtung (als Funktion der Zeit) verknüpft.

Die Datenbank umfasst vorzugsweise Einträge, welche den Einheiten, die auf der Fördereinrichtung und/oder in der Lagerstätte positioniert sind, entsprechen. Vorzugsweise erfolgen die virtuelle Nachbildung der Lagerstätte und sowie das Nachverfolgen der jeweiligen Einheit auf der Fördereinrichtung mit Hilfe derselben Datenbank. Bei Einträgen, die Einheiten auf der Fördereinrichtung entsprechen, erfolgt vorzugsweise eine Darstellung der Position als Funktion der Zeit.

Alternativ oder zusätzlich erfolgt die virtuelle Nachbildung der Fördereinrichtung derart, dass den Einträgen Bereiche des Förderbandes zugeordnet sind und die Einheiten entsprechend einem Schieberegister durch die Einträge der Datenbank laufen.

Darüber hinaus kann die jeweilige Einheit auch mit einer Position in der Lagerstätte verknüpft werden. Die Einheit oder der Eintrag kann hierbei einem Volumenelement in der Lagerstätte zugeordnet werden. Vorzugsweise erfolgt die Zuordnung des Volumenelementes zu der jeweiligen Einheit variabel, so dass auch eine Veränderung der Lagerstätte, beispielhaft eine Nachverdichtung der Lagerstätte oder eine Entnahme von einer Seite der Lagerstätte die Position der jeweiligen Einheit des Schüttgutes nachverfolgt werden kann. Eine Veränderung der Lagerstätte kann mit Hilfe von Sensoren festgestellt werden und die Position der jeweiligen Einheiten in der Datenbank entsprechend korrigiert werden.

Bei einer Entnahme der Einheit des Schüttgutes aus der Lagerstätte wird die Datenbank entsprechend aktualisiert. Die entnommene Einheit kann auf der Fördereinrichtung nachverfolgt werden.

Eine besonders einfache Ausführung erfolgt durch die Verwendung einer gemeinsamen Datenbank, wobei die gemeinsame Datenbank die jeweilige Einheit des Schüttgutes sowohl mit der Position der jeweiligen Einheit auf der Fördereinrichtung und/oder der Position in der Lagerstätte umfasst. Der jeweilige Eintrag der Datenbank kann die Materialeigenschaft der jeweiligen Einheit des Schüttgutes umfassen.

Vorzugsweise ist mit Hilfe des Verfahrens der Transportweg der jeweiligen Einheit erfassbar. Der Transportweg umfasst vorzugsweise die Fördereinrichtung von der Analyseeinrichtung zur Lagerstätte oder zur weiteren Verarbeitung. Optional werden ein Teil der Einheiten in einer Lagerstätte (zwischen-) gelagert.

Für einen verbesserten Überblick kann der Inhalt der Datenbank graphisch einem Benutzer dargestellt werden. So können die Fördereinrichtungen und/oder die jeweilige Lagerstätte angezeigt werden und die jeweilige Einheit in ihrer Position auf den jeweiligen Fördereinrichtungen oder Lagerstätten angezeigt werden. Vorzugsweise wird die Materialeigenschaft der jeweiligen Einheit oder deren Bewertung gemäß einem Farb-Code angezeigt. Die Anzeige kann auf einem Leitstand einer Mine, einer Hafenanlage oder einer Anlage der Schwerindustrie oder einem Kraftwerk erfolgen.

Durch die Kenntnis der Materialeigenschaft der jeweiligen Einheit können nachfolgende Prozesse, wie Mahlprozesse, Aufbereitungsvorgänge oder eine Verfeuerung, an die Materialeigenschaft der jeweiligen Einheit angepasst werden. Hierdurch können nachfolgende Prozesse effizienter gestaltet werden.

Durch die hier vorgestellte Erfindung kann eine lückenlose Überwachung des Schüttgutes, beispielhaft ausgehend von einer Mine bis zur weiteren Verarbeitung oder Verladung in einer Hafenanlage erfolgen.

In einer vorteilhaften Ausgestaltung der Erfindung wird die Position der jeweiligen Einheit in der Datenbank mit Hilfe einer Geschwindigkeit der Fördereinheit bestimmt.

Vorzugsweise wird die jeweils aktuelle Position der jeweiligen Einheit als Eintrag in der Datenbank hinterlegt.

Gemäß dieser Ausführung wird die Datenbank regelmäßig aktualisiert. Hierzu kann eine Transportgeschwindigkeit der Fördereinrichtung für die Datenbank bereitgestellt werden. Durch die Kenntnis der Geschwindigkeit der Fördereinrichtung kann die Position der jeweiligen Einheit auf der Fördereinrichtung als zeitliche Funktion berechnet werden. Durch die Berechnung der aktuellen Position können die Zugriffe auf die Datenbank vorteilhaft verringert werden.

Die Geschwindigkeit der Fördereinrichtung kann mit Hilfe von Bild-aufnehmenden Sensoren ermittelt werden. Die Geschwindigkeit kann auch durch eine Soll-Geschwindigkeit ermittelt werden, welche einem Antrieb der Fördereinrichtung bereitgestellt wird.

Die Geschwindigkeit der Fördereinrichtung kann durch Sensoren bestimmt werden und/oder von einer übergeordneten Fördereinrichtung vorgegeben werden. Im Falle von Bergbau-Lastwagen können GPS-Daten zur Bestimmung der Position der jeweiligen Einheit dienen.

Durch die Vorgabe der Position der jeweiligen Einheit kann ein lückenloses Management der jeweiligen Einheit erfolgen.

In einer weiteren vorteilhaften Ausgestaltung der Erfindung wird anhand des jeweilige Eintrages in der Datenbank eine Trennvorrichtung gesteuert, wobei die Trennvorrichtung Einheiten anhand der jeweiligen Materialeigenschaft über eine erste Fördereinrichtung, insbesondere zur weiteren Verarbeitung, oder über eine weitere Fördereinrichtung, insbesondere zur Ablage auf einer Halde, trennt.

Die Trennvorrichtung bestimmt vorzugsweise den nachgelagerten Transportweg der jeweiligen Einheit. Die Trennvorrichtung wird vorzugsweise in Echtzeit angesteuert.

Durch die Trennvorrichtung kann aktiv das Management von Einheiten des Schüttgutes gesteuert werden.

In einer weiteren vorteilhaften Ausgestaltung der Erfindung erfolgt die Bestimmung der Materialeigenschaft der jeweiligen Einheit mittels einer ersten Analyseeinrichtung, wobei die Bestimmung der Materialeigenschaft der jeweiligen Einheit auf der Fördereinrichtung erfolgt.

Die erste Analyseeinrichtung und/oder eine zweite Analyseeinrichtung bestimmen die Materialeigenschaft vorzugsweise mit Hilfe von elektromagnetischer Strahlung, insbesondere Röntgenstrahlung.

Elektromagnetische Strahlung wird von dem Schüttgut reflektiert und/oder absorbiert. Vorzugsweise wird die reflektierte elektromagnetische Strahlung mit einem Detektor erfasst. Alternativ oder zusätzlich kann auch die nicht-absorbierte elektromagnetische Strahlung mit einem Detektor erfasst werden.

Elektromagnetische Strahlung unterschiedlicher Wellenlängenbereichen kann Anwendung finden. Die Analyseeinrichtung basiert vorzugsweise auf Röntgen-Absorptionsspektroskopie. Alternativ oder zusätzlich kann die Materialeigenschaft mit Hilfe von sichtbarem Licht (Wellenlängen von 400 bis 800 Nanometer), UV-Licht (Wellenlängen von 100 bis 400 Nanometer) und/oder im IR-Licht (Wellenlängen von 800 Nanometer bis etwa 50 Mikrometer) ermittelt werden.

Vorzugsweise weist die Analyseeinrichtung einen Detektor für die reflektierte und/oder nicht-absorbierte elektromagnetische Strahlung auf.

Durch die Verwendung von elektromagnetischer Strahlung, insbesondere Röntgenstrahlung, erfolgt eine schnelle und sichere Feststellung der jeweiligen Materialeigenschaft.

Die Analyseeinrichtung dient vorzugsweise zur Ermittlung eines Absorptionsspektrums und/oder eines Fluoreszenz-Spektrums. Anhand des Spektrums kann auf die gewünschte Materialeigenschaft geschlossen werden.

Vorzugsweise wird jeweils ein Spektrum einer Einheit des Schüttgutes zugeordnet. Ein solches Spektrum wird vorzugsweise als Messergebnis in Form eines Signals einer Recheneinrichtung und/oder einer Steuereinrichtung bereitgestellt.

Die Berechnung der Materialeigenschaft der jeweiligen Einheit erfolgt vorteilhaft mit Hilfe einer Recheneinheit, die der Analyseeinrichtung zugeordnet ist.

Bei einer weiteren vorteilhaften Ausgestaltung der Erfindung erfolgt die Bereitstellung der Materialeigenschaft der jeweiligen Einheit des Schüttgutes mit Hilfe eines selbstlernenden Algorithmus.

Das Absorptionsspektrum oder das Fluoreszenzspektrum werden vorzugsweise mit Hilfe eines selbstlernenden Algorithmus ausgewertet. Anhand des Spektrums der jeweiligen Einheit des Schüttgutes wird die Materialeigenschaft zugeordnet.

Vorzugsweise wird die jeweilige Analyseeinrichtung mit Hilfe von Einheiten von Schüttgut "antrainiert", für welche die Materialeigenschaft bekannt ist.

Durch den Einsatz eines selbstlernenden Algorithmus kann eine besonders schnelle und effiziente Auswertung der Spektren erfolgen. So kann die Funktion der Analyseeinrichtung weiter verbessert werden.

Die Bestimmung der Materialeigenschaft der jeweiligen Einheit erfolgt vorzugsweise derart, dass die Einheit direkt auf der Fördereinrichtung analysiert wird. Bei Ausführung der Fördereinrichtung als Förderband erfolgt die Bestimmung der Materialeigenschaft der jeweiligen Einheit derart, dass die jeweilige Einheit mit optischen Methoden analysiert wird, während die Einheit entlang der ersten Analyseeinrichtung geführt wird.

Im Falle eines Bergbau-Lastwagens als Fördereinrichtung ist die Analyseeinrichtung auf dem Bergbau-Lastwagen positioniert und bestimmt die Materialeigenschaft der jeweiligen Einheit während des Transportes der jeweiligen Einheit auf dem Bergbau-Lastwagen.

Durch die Analyse der jeweiligen Einheit direkt auf der Transporteinrichtung ist eine besonders schnelle und einfache Bestimmung der Materialeigenschaft möglich.

Bei einer weiteren vorteilhaften Ausgestaltung der Erfindung erfolgt die Zuordnung der Materialeigenschaft zu der jeweiligen Einheit, während sich die jeweilige Einheit auf der Fördereinrichtung befindet.

Die Zuordnung der Materialeigenschaft zu der jeweiligen Einheit erfolgt vorzugsweise im Rahmen der virtuellen Nachbildung der Fördereinrichtung. Die Zuordnung der Materialeigenschaft erfolgt vorzugsweise durch Zuordnung der Materialeigenschaft zu dem entsprechenden Eintrag in der Datenbank. Insbesondere durch die optische Analyse der jeweiligen Einheit ist eine schnelle Bestimmung der Materialeigenschaft der jeweiligen Einheit möglich. Die jeweilige Einheit kann sich zumindest noch einige Sekunden auf der Fördereinrichtung befinden.

Durch die Zuordnung der Materialeigenschaft zu der jeweiligen Einheit kann die Entscheidung, wohin die Einheit transportiert wird oder wie die Einheit weiter verarbeitet wird, entschieden werden, solange sich die jeweilige Einheit auf der Fördereinrichtung befindet. So kann der Ausschuss von Schüttgut erheblich vermindert werden.

Bei einer weiteren vorteilhaften Ausgestaltung der Erfindung erfolgen die Zuordnung der Materialeigenschaft und/oder der Bewertung zu der jeweiligen Einheit in Echtzeit.

Unter einer Zuordnung der Materialeigenschaft zu der jeweiligen Einheit in Echtzeit kann verstanden werden, dass die Zuordnung so schnell erfolgt, dass ein Abbild der Einheit, zusammen mit der Materialeigenschaft, in der Datenbank oder in der virtuellen Abbildung hinterlegt werden kann.

Unter einer Zuordnung der Materialeigenschaft in Echtzeit kann verstanden werden, dass die Zuordnung der Materialeigenschaft zur jeweiligen Einheit innerhalb der Zeitspanne erfolgt, die zwischen Schaltzyklen einer Antriebssteuerung liegt.

Demnach kann unter einer Zuordnung der Materialeigenschaft zu der jeweiligen Einheit in Echtzeit eine Zuordnung innerhalb von fünf Millisekunden, vorzugsweise innerhalb von zwei Millisekunden, verstanden werden. Durch die kurze Dauer der Zuordnung kann sichergestellt werden, dass eine Stromregelung des Antriebs, beispielsweise der Fördereinrichtung, ohne Verzögerung erfolgen kann.

Allgemein kann unter einer Zuordnung der Materialeigenschaft in Echtzeit eine sehr schnelle Zuordnung verstanden werden, so dass nachfolgende Prozesse nicht verzögert werden.

In einer weiteren vorteilhaften Ausgestaltung der Erfindung erfolgt eine Anzeige des Inhalts der Datenbank und/oder der virtuellen Nachbildung an einen Benutzer.

Die Anzeige erfolgt vorzugsweise auf einem Leitstand. Die Anzeige erfolgt vorzugsweise derart, dass ein Benutzer den Verlauf der jeweiligen Einheit auf der Fördereinrichtung und/oder in der Lagerstätte angezeigt bekommt.

Die Materialeigenschaft kann anhand einer Zuordnung einer Farbe für Bereiche der Materialeigenschaft angezeigt werden.

Durch die Anzeige der Materialeigenschaft kann der Benutzer die wesentlichen Vorgänge des Schüttgutes auf einen Blick erfassen.

Bei einer weiteren vorteilhaften Ausgestaltung der Erfindung wird anhand der virtuellen Nachbildung der Lagerstätte ein Bearbeitungsprofil der Lagerstätte ermittelt, wobei anhand des Bearbeitungsprofils eine Be- und/oder Entlade-Vorrichtung angesteuert wird.

Ein Bearbeitungsprofil kann bei einer Halde als Oberflächenprofil der Halde ausgebildet sein. Ein Bearbeitungsprofil umfasst vorteilhaft ein Oberflächenprofil und einen Teil, an welcher Position der Lagerstätte Einheiten von Schüttgut einer vorgebbaren Materialeigenschaft angeordnet sind. Der Teil kann auch die Position der jeweiligen Einheit in der Lagerstätte angeben. Ein solches Oberflächenprofil gibt vorteilhaft die Höhe des abgelagerten Schüttgutes als Funktion ihrer Position an. Anhand des Oberflächenprofils kann die Be- und/oder Entlade-Vorrichtung derart angesteuert werden, dass Einheiten eines Schüttgutes von einer vorgesehenen Position entnommen werden. Ein solches Oberflächenprofil kann als zweidimensionale Fläche in einem dreidimensionalen Raum ausgebildet sein.

Gemäß dem Bearbeitungsprofil ist die Be- und/oder Entlade-Vorrichtung so ansteuerbar, dass von einer Oberfläche der Lagerstätte, insbesondere der Halde, eine vorbestimmte Einheit entnommen werden kann.

Gemäß dem Bearbeitungsprofil wird vorzugsweise ermittelt, wo eine Be- und/oder Entlade-Vorrichtung Einheiten des Schüttgutes entnehmen kann, um Schüttgut mit einer vorgesehenen Materialeigenschaft zu entladen.

Eine solche Be- und/oder Entlade-Vorrichtung kann als Schaufelrad-Bagger ausgebildet sein.

Insbesondere bei einer Lagerstätte, die als Halde ausgebildet ist, können Witterungseinflüsse oder eine Nachverdichtung zu einer Änderung der Position der jeweiligen Einheit führen. Eine solche Änderung kann beispielhaft mit Hilfe von Sensoren ermittelt werden und die Position der jeweiligen Einheit entsprechend korrigiert werden. Die Korrektur erfolgt vorzugsweise mit Hilfe eines physikalischen Modells, wobei die Kompressibilität beziehungsweise die Menge der Lufteinschlüsse des Schüttgutes eine Eingangsgröße bilden.

Durch die Sensor-basierte Bestimmung von Eigenschaften der Halde können Einheiten einer vorgesehenen Materialeigenschaft von der Lagerstätte entladen werden.

Bei einer vorteilhaften Ausgestaltung der Erfindung erfolgt die Bestimmung der Materialeigenschaft der jeweiligen Einheit mit Hilfe eines selbstlernenden Algorithmus.

Vorzugsweise erfolgt die Analyse der jeweiligen Einheit des Schüttgutes durch eine Messroutine. Die Analyseeinrichtung stellt Messdaten bereit, wodurch die Auswertung der Messdaten, vorzugsweise die Bestimmung der Materialeigenschaft, erfolgt.

Die Bestimmung der Materialeigenschaft anhand der Messdaten erfolgt mit Hilfe eines Auswertealgorithmus. Vorzugsweise basiert der Auswertealgorithmus auf einem semiempirischen Modell mit einem selbstlernenden Anteil.

Der selbstlernende Algorithmus ist vorzugsweise als neuronales Netz aufgebaut. Weiter vorteilhaft können Verfahren der künstlichen Intelligenz zur Auswertung der Analyseergebnisse verwendet werden.

Durch den Einsatz lernfähiger Auswertealgorithmen kann eine fortwährende Verbesserung der Bereitstellung der Materialeigenschaft erreicht werden.

Bei einer weiteren vorteilhaften Ausgestaltung der Erfindung wird die Materialeigenschaft zumindest eines Teils der Einheiten erneut an einer zweiten Position ermittelt.

Vorzugsweise wird die erneut ermittelte Materialeigenschaft der jeweiligen Einheit der ersten Analyseeinrichtung bereitgestellt. Die erneut ermittelte Materialeigenschaft dient vorzugsweise zur Verbesserung des Auswertealgorithmus, insbesondere zur Verbesserung des selbstlernenden Algorithmus.

Darüber hinaus können gezielt Einheiten mit einer hohen Bewertung, also vorzugsweise mit einem hohen Metallgehalt, erneut analysiert werden.

Durch die zweifache Bestimmung der Materialeigenschaft der jeweiligen Einheit kann die jeweilige Analyseeinrichtung in ihrer Funktion vorteilhaft verbessert werden.

Bei einer vorteilhaften Ausgestaltung der Erfindung wird die virtuelle Nachbildung der Lagerstätte nach der Entnahme von einer Einheit aktualisiert.

Die virtuelle Nachbildung der Lagerstätte wird vorteilhaft nach Beladung mit zumindest einer Einheit korrigiert, wobei die Einheit an der Position, bei der die Beladung der Lagerstätte erfolgt ist, in der virtuellen Nachbildung ergänzt wird.

Die virtuelle Nachbildung wird vorteilhaft bei Entnahme einer Einheit aktualisiert, in dem die jeweils entnommene Einheit aus der virtuellen Nachbildung der Lagerstätte entfernt wird.

Vorzugsweise wird die jeweils von der Lagerstätte entnommene Einheit auf einer Fördereinrichtung erfasst und nachverfolgt.

Vorzugsweise erfolgt eine Aktualisierung der virtuellen Nachbildung der Lagerstätte in regelmäßigen zeitlichen Abständen.

Durch die Aktualisierung der virtuellen Nachbildung der Lagerstätte kann jederzeit nachverfolgt werden, wo/wie viele Einheiten einer Materialeigenschaft sich in/auf der Lagerstätte befinden.

In einer weiteren vorteilhaften Ausgestaltung der Erfindung wird die von der Lagerstätte entnommene Einheit anhand einer virtuellen Nachbildung der Fördereinrichtung weiter nachverfolgt.

Vorzugsweise erfolgt die Nachverfolgung der jeweiligen Einheit nach einer Entladung der Lagerstätte auf die Fördereinrichtung anhand der virtuellen Nachbildung der jeweiligen Fördereinrichtung.

Durch die Nachverfolgung der jeweiligen Einheit nach Entnahme aus/von der Lagerstätte, insbesondere mit Hilfe einer weiteren virtuellen Nachbildung der Fördereinrichtung, auf welche die Einheit überführt wird, kann eine lückenlose Nachverfolgung der jeweiligen Einheit von der Mine bis zur Verladung auf ein Schiff/einen Eisenbahnwagon oder bis zur weiteren Verarbeitung erfolgen.

Bei einer weiteren vorteilhaften Ausgestaltung der Erfindung erfolgt zumindest ein Teil der Schritte des Verfahrens mit Hilfe zumindest eines Prozessors zumindest einer Recheneinheit.

Die Recheneinheit ist vorzugsweise einer Steuereinrichtung zugeordnet. Die Recheneinrichtung kann auch als dezentraler Server in einem Netzwerk und/oder einer Cloud ausgebildet sein.

Mit Hilfe der Recheneinheit können folgende Schritte ausgeführt werden:
- Steuern oder Regeln einer Geschwindigkeit der Fördereinrichtung;
- Verwaltung der Datenbank, insbesondere für die virtuelle Nachbildung der jeweiligen Fördereinrichtung oder der jeweiligen Lagerstätte;
- Bereitstellen der Materialeigenschaft auf Grundlage von Messwerten der jeweiligen Analyseeinrichtung und/oder
- Ansteuerung der Be- und/oder Entlade-Vorrichtung für die Lagerstätte.

Vorzugsweise erfolgt ein Nachverfolgen der jeweiligen Einheit mit Hilfe einer virtuellen Nachbildung der Fördereinrichtung. Gibt es eine Mehrzahl von Fördereinrichtungen, können diese gemeinsam durch eine virtuelle Nachbildung verknüpft sein.

Das Computerprogramm ist vorzugsweise zur Durchführung des vorstehend beschriebenen Verfahrens ausgebildet, wobei das Computerprogramm auf zumindest einer Recheneinheit mit Hilfe von zumindest einem Prozessor ausführbar ist, wobei dem Computerprogramm eine Datenbank zugeordnet ist, wobei das Computerprogramm die Einträge der Datenbank erstellt und/oder aktualisiert.

Die Recheneinheit ist vorzugsweise als Cloud ausgebildet. Das Computerprogramm weist vorzugsweise Schnittstellen zur Bereitstellung der Messergebnisse von der jeweiligen Analyseeinrichtung auf. Das Computerprogramm umfasst vorzugsweise die Datenbank, wobei die Datenbank analog einem Schieberegister zur Hinterlegung der jeweiligen Einheit ausgebildet ist, insofern die Einheit auf der Fördereinrichtung oder der Lagerstätte positioniert ist.

Nach der Verladung oder bei der Verarbeitung der jeweiligen Einheit wird das Abbild der Einheit aus der Datenbank vorzugsweise gelöscht.

Die Vorrichtung zum Management des Schüttgutes umfasst eine Fördereinrichtung, zumindest eine erste Analyseeinrichtung sowie eine Steuereinrichtung, wobei die Steuereinrichtung zur Durchführung des hier beschriebenen Verfahrens ausgebildet ist.

Die Vorrichtung umfasst optional eine Trennvorrichtung. Die Trennvorrichtung dient zur Trennung von Einheiten auf mehrere Fördereinrichtungen. Die Trennvorrichtung dient vorzugsweise zur Trennung der jeweiligen Einheiten, um die jeweilige Einheit ihrem nachgelagerten Transportweg zuzuführen.

Weiter kann die Vorrichtung eine oder mehrere Lagerstätten umfassen, wobei die jeweilige Lagerstätte zur zeitweiligen Lagerung der jeweiligen Einheit des Schüttgutes ausgebildet ist.

Bei einer weiteren vorteilhaften Ausgestaltung der Erfindung wird anhand der Materialeigenschaft, welche von einer der Analyseeinrichtungen oder bei der Bearbeitung der jeweiligen Einheit des Schüttgutes bereitgestellt wird, die jeweils andere Analyseeinrichtung oder die Bearbeitung des Schüttgutes verbessert.

Vorzugsweise durchläuft zumindest ein Teil der Einheiten des Schüttgutes die zweite Analyseeinrichtung. Darüber hinaus kann anhand der weiteren Bearbeitung die Materialeigenschaft der jeweiligen Einheit des Schüttgutes ermittelt werden.

Die nochmalige Bestimmung der Materialeigenschaft der Einheit des Schüttgutes dient vorzugsweise der Korrektur der Materialeigenschaft der jeweiligen Einheit des Schüttgutes.

Vorzugsweise erfolgt mit Hilfe der zweiten Analyseeinrichtung eine Feststellung der Genauigkeit der virtuellen Nachbildung der Lagerstätte. Durch die erneute Ermittlung der Materialeigenschaft der Einheit, welche von der Lagerstätte entladen oder entnommen worden ist, kann ermittelt werden, wie genau die virtuelle Nachbildung der Lagerstätte ist.

Darüber hinaus kann das Ergebnis der zweiten Analyseeinrichtung zur Verbesserung des selbstlernenden Algorithmus der ersten Analyseeinrichtung dienen. Alternativ oder zusätzlich kann auch das Ergebnis der ersten Analyseeinrichtung zur Verbesserung des selbstlernenden Algorithmus der zweiten Analyseeinrichtung dienen.

Durch einen Vergleich der Materialeigenschaften der jeweiligen Einheit des Schüttgutes kann die Güte der jeweiligen Analyse bzw. die Funktion der jeweiligen Analyseeinrichtung bestimmt werden. Darüber hinaus kann ermittelt werden, wie gut oder wie genau die Nachverfolgung der Einheiten des Schüttgutes und/oder die Trenneinrichtung funktioniert.

Bei einer weiteren vorteilhaften Ausgestaltung der Erfindung werden die Einheiten des Schüttgutes der Lagerstätte gemäß der virtuellen Nachbildung der Lagerstätte, insbesondere anhand eines Oberflächenprofils oder eines Bearbeitungsprofils der Lagerstätte, wieder auf die Fördereinrichtung überführt.

Die jeweilige Einheit, welche die erste Analyseeinrichtung durchläuft kann in der Lagerstätte zwischengelagert werden. Die Position der jeweiligen Einheit des Schüttgutes kann mit Hilfe der virtuellen Nachbildung der Lagerstätte erfolgen. Durch die virtuelle Nachbildung der Lagerstätte kann eine Entlade-Vorrichtung, insbesondere ein Schaufelradbagger, angesteuert werden. Die Entladung erfolgt mit Hilfe der Entlade-Vorrichtung. Die Entlade-Vorrichtung wird vorzugsweise auf Grundlage des Bearbeitungsprofils der jeweiligen Lagerstätte angesteuert.

Mit Hilfe der Entnahme-Vorrichtung kann die jeweilige Position des Schüttgutes angefahren werden und die gewünschte Einheit des Schüttgutes aus der Lagerstätte entnommen werden.

Die jeweilige Einheit wird von der Lagerstätte wieder auf die entsprechende Fördereinrichtung überführt. Mit Hilfe der Fördereinrichtung kann die jeweilige Einheit des Schüttgutes einer Verladestation oder einer weiteren Verarbeitung zugeführt werden.

Das Oberflächenprofil der Lagerstätte ist bei einer Halde ein Profil der Oberfläche der Halde. Im Falle eines Silos kann das Oberflächenprofil dem Füllstand, insbesondere als Funktion der Position in dem Silo, entsprechen. Das Bearbeitungsprofil umfasst darüber hinaus die Position der jeweiligen Einheit und optional die Materialeigenschaft der jeweiligen Einheit.

Anhand des Oberflächenprofils oder des Bearbeitungsprofils kann die Entnahme-Vorrichtung so angesteuert werden, dass keine Kollision einer Schaufel oder eines sonstigen Werkzeugs mit der Oberfläche der Lagerstätte erfolgt. Gemäß dem Oberflächenprofil ist also eine Ansteuerung der Entnahme-Vorrichtung sowie der Ablage-Vorrichtung für das Schüttgut steuerbar. Anhand des Bearbeitungsprofils kann die Entlade-Vorrichtung derart angesteuert werden, dass Einheiten von Schüttgut einer vorgebbaren Materialeigenschaft von der Lagerstätte entladen werden.

Bei einer weiteren vorteilhaften Ausgestaltung der Erfindung wird in Abhängigkeit der Materialeigenschaft der jeweiligen Einheit eine Vorrichtung zur Beladung und/oder zum Entladen von Schüttgut von der Lagerstätte angesteuert, so dass
- das Schüttgut in Abhängigkeit von der virtuellen Nachbildung der Fördereinrichtung die Einheiten des Schüttguts auf der Lagerstätte abgelegt werden,
- und/oder gemäß der virtuellen Nachbildung der Lagerstätte ein Bearbeitungsprofil der Lagerstätte erstellt wird und gemäß dem Bearbeitungsprofil die Vorrichtung zur Ablage und/oder Entnahme des Schüttgutes gesteuert wird,
- und/oder anhand der virtuellen Nachbildung der Lagerstätte bei dem Entladen der jeweiligen Einheit des Schüttgutes insbesondere Einheiten mit einer festgelegten Materialeigenschaft entnommen werden.

Bevorzugt erfolgt die Steuerung der Entlade-Vorrichtung derart, dass Einheiten von der Lagerstätte entnommen werden, die eine vorgebbare gemittelte Materialeigenschaft aufweisen. So kann beispielhaft ein zeitlich konstanter Erzgehalt von 5% von einer Lagerstätte auf eine Fördereinrichtung überführt werden.

Vorzugsweise erfolgt die Entnahme des Schüttgutes von der Lagerstätte derart, dass lediglich Einheiten mit einer vorgegebene Materialeigenschaft, beispielhaft 10% Erzgehalt, auf die Fördereinrichtung überführt wird.

Vorzugsweise erfolgt eine Ablage der Einheiten des Schüttgutes in der Lagerstätte gemäß einem vorbestimmten Schema. Beispielsweise werden Einheiten mit einem hohen Erzgehalt oder einem hohen Brennwert in einem anderen Bereich der Lagerstätte als Einheiten mit einem jeweils niedrigen Erzgehalt/Brennwert abgelegt.

Alternativ oder zusätzlich kann eine Darstellung der jeweiligen Einheiten als virtuelle Nachbildung der Lagerstätte oder der Fördereinrichtung in Form von Listen erfolgen oder angezeigt werden.

Durch die Darstellung der jeweiligen virtuellen Nachbildung kann ein Benutzer auf einen Blick einen Überblick über wesentliche Funktion einer Mine, einer Verladestation, einer Hafenanlage oder einer sonstigen industriellen Anlage erhalten.

Bei einer weiteren vorteilhaften Ausgestaltung der Erfindung erfolgt ein Transport oder die Bearbeitung des Schüttgutes in Abhängigkeit der Materialeigenschaft der jeweiligen Einheit.

Unter einem Transport der jeweiligen Einheit wird der Transport mit Hilfe der Fördereinrichtung verstanden. Der Transport des Schüttgutes kann von der Mine zu einer Sammelstelle oder der ersten Verarbeitung wie einer Mühle erfolgen.

Vorzugsweise kann schon in der Mine, insbesondere unter Tage, nach Durchlaufen der ersten Analyseeinrichtung entschieden werden, ob das Erz aus der Mine herausgeschafft wird oder in der Mine, beispielhaft unter Tage, verbleibt.

Unter einer weiteren Verarbeitung des Schüttgutes wird ein Mahlvorgang, eine Verfeuerung, ein Flotationsverfahren oder eine sonstige Veredelung oder ein sonstiger Einsatz des Schüttgutes verstanden.

Anhand der Materialeigenschaft, wie der Gesteinshärte, kann beispielhaft das Drehmoment eines Mühlenantriebs angepasst werden.

Weiter kann anhand eines Brennwerts eines Schüttgutes, z.B. Kohle, die Zufuhr in eine Verbrennungsanlage gesteuert werden. Hierdurch kann die Bearbeitung der jeweiligen Einheit des Schüttgutes verbessert werden.

Bei einer weiteren vorteilhaften Ausgestaltung der Erfindung erfolgt das Nachverfolgen der jeweiligen Einheit des Schüttgutes mit Hilfe eines Computerprogramms, wobei dem Computerprogramm eine Datenbank zugeordnet ist.

Das Computerprogramm weist vorzugsweise Schnittstellen zur Aufnahme der Materialeigenschaft der jeweiligen Einheit auf. Das Computerprogramm weist darüber hinaus vorzugsweise Schnittstellen zur Ausgabe von Steuersignalen an die jeweilige Fördereinrichtung, an die Be- und/oder Entlade-Vorrichtung, auf.

Die Datenbank dient zur Aufnahme und/oder zur Nachverfolgung der jeweiligen Einheit des Schüttgutes mit Hilfe des Computerprogramms. Das Computerprogramm kann als Bindeglied zwischen der Steuerung für die Fördereinrichtung, der Be- und/oder Entlade-Vorrichtung sowie der Trennvorrichtung auf der einen Seite und der Datenbank auf der anderen Seite ausgebildet sein. Optional kann die Datenbank in das Computerprogramm integriert sein.

Durch den Einsatz eines Computerprogramms können die Bewertung und/oder das Nachverfolgen der jeweiligen Einheit leichter und schneller erfolgen.

Bei einer weiteren vorteilhaften Ausgestaltung der Erfindung weist die Datenbank für die jeweilige Einheit des Schüttgutes einen Eintrag auf, wobei dem jeweiligen Eintrag die Position der Einheit und/oder die Materialeigenschaft der jeweiligen Einheit zugeordnet sind. Vorzugsweise weist der jeweilige Eintrag auch die Bewertung der jeweiligen Einheit auf Grundlage der Materialeigenschaft auf.

Die Datenbank ist hierbei vorzugsweise dynamisch aufgebaut, so dass eine neu auf die Fördereinrichtung gebrachte Einheit einen neuen Eintrag generiert und der Eintrag, der einer die Fördereinrichtung verlassenden Einheit entspricht, gelöscht wird. Vorzugsweise ist der jeweiligen Fördereinrichtung und/oder der jeweiligen Lagerstätte eine eigene Datenbank zugeordnet.

In einer weiteren vorteilhaften Ausgestaltung der Erfindung erfolgen neben der Zuordnung der Materialeigenschaft die Bewertung und/oder die Nachverfolgung der jeweiligen Einheit des Schüttgutes in Echtzeit.

Durch die Nachverfolgung der jeweiligen Einheit in Echtzeit kann auch bei einem hohen Durchsatz von Schüttgut eine sichere und einfache Bewertung des Schüttgutes erfolgen.

In einer weiteren vorteilhaften Ausgestaltung der Erfindung sind die erste Analysevorrichtung und die Trennvorrichtung in einer Mine positioniert.

Insbesondere unter Tage kann durch die erste Analyseeinrichtung entschieden werden, welche Einheiten des Schüttgutes aufwendig nach oben transportiert werden sollen.

Durch die Positionierung der Trennvorrichtung in der Mine kann gleich unter Tage gehaltvolles Erz oder Kohle von taubem Gestein getrennt werden.

Durch die gezielte Analyse des Schüttgutes in der Mine kann der aufwendige Transport auf die Einheiten beschränkt werden, welche zur weiteren Bearbeitung geeignet sind.

Bei einer weiteren vorteilhaften Ausgestaltung der Erfindung dient die Steuereinrichtung zur Steuerung der Fördereinrichtung, wobei eine Steuereinrichtung anhand der Materialeigenschaft eine Geschwindigkeit der Fördereinrichtung einstellt.

Gemäß der Materialeigenschaft kann beispielhaft eine Drehzahl eines Antriebs für einen Gurtförderer eingestellt werden. Durch die Geschwindigkeit des Gurtförderers ist beispielhaft eine Zufuhr von einem brennbaren Schüttgut, insbesondere Kohle, eines vorgebbaren Brennwertes einstellbar. Demnach würde bei einem geringen Brennwert des auf der Fördereinrichtung transportierten Schüttgutes die Geschwindigkeit der Fördereinrichtung erhöht.

Durch eine Veränderung der Geschwindigkeit der Fördereinrichtung können vorteilhaft schwankende Materialeigenschaften eines Schüttgutes bei der nachfolgenden Bearbeitung des Schüttgutes ausgeglichen werden.

In einer vorteilhaften Ausgestaltung der Erfindung steuert die Steuereinrichtung die Trennvorrichtung an, wobei die Trennvorrichtung zumindest eine Einheit des Schüttgutes auf Grundlage der Materialeigenschaft oder der Bewertung von den weiteren Einheiten trennt oder einer weiteren Fördereinrichtung oder einer Lagerstätte zuführt.

Ein beispielhaftes Computerprogramm weist eine Schnittstelle zu einer Datenbank oder eine Datenbank auf, wobei das Computerprogramm zumindest zum Teil auf einer Recheneinrichtung der Steuereinrichtung ausführbar ist, wobei das Computerprogramm zur Durchführung des hier beschriebenen Verfahrens ausgebildet ist.

Das Computerprogrammprodukt wird vorzugsweise zur Durchführung des Verfahrens in einen Arbeitsspeicher einer Recheneinheit geladen. Das Computerprogramm wird auf zumindest einer CPU der Recheneinheit ausgeführt.

Vorzugsweise ist das Computerprogramm auf einem dezentralen Server, insbesondere einer Cloud, ausführbar. Darüber hinaus ist das Computerprogramm auf einem nicht-flüchtigen Datenträger wie einer CD-Rom, einem USB-Stick oder einer Festplatte (HDD) speicherbar.

Durch den Einsatz des Computerprogramms kann das Verfahren sicher und in Echtzeit durchgeführt werden.

Eine beispielhafte Vorrichtung zum Management von Einheiten eines Schüttguts weist eine erste Analyseeinrichtung zur Analyse und Bereitstellung einer Materialeigenschaft einer Einheit des Schüttgutes auf einer Fördereinrichtung auf, wobei eine Steuereinrichtung zur Bewertung und zum Nachverfolgen der jeweiligen Einheit ausgebildet ist, wobei die Fördereinrichtung zum Transport des Schüttgutes vorgesehen ist,
- wobei eine Lagerstätte zur Aufnahme des Schüttgutes vorgesehen ist und die Steuereinrichtung zur Ermittlung einer virtuellen Nachbildung der Lagerstätte ausgebildet ist,
- und/oder weiter aufweisend eine Trennvorrichtung, wobei die Trennvorrichtung zur Trennung der Einheiten des Schüttgutes auf der Fördereinrichtung anhand der Materialeigenschaft der jeweiligen Einheit des Schüttgutes ausgebildet ist.

Vorzugsweise ist die Steuereinrichtung zur Steuerung oder Regelung der Geschwindigkeit der Fördereinrichtung ausgebildet. Die Steuereinrichtung ist zur Aufnahme von ermittelten Materialeigenschaften von der Analyseeinrichtung ausgebildet.

Die Trennvorrichtung dient vorteilhaft zur Separation von Einheiten von Schüttgut. Die Trennvorrichtung dient vorzugsweise zur Auswahl von Einheiten des Schüttgutes, welches von der Mine zur weiteren Bearbeitung transportiert wird. So kann beispielhaft Kohle von taubem Gestein oder Erdreich getrennt werden, ohne dass das Erdreich bzw. das taube Gestein aus der Mine heraus transportiert werden muss.

Der Steuereinrichtung ist eine Recheneinheit zugeordnet und/oder sie umfasst eine Recheneinheit. Die Recheneinheit dient, insbesondere mit Hilfe einer Datenbank, zur Erstellung der virtuellen Nachbildung der Lagerstätte. Darüber hinaus können die Recheneinheit und/oder die Datenbank mit dem Computerprogramm zur virtuellen Nachbildung der Fördereinrichtung ausgebildet sein. Die virtuelle Nachbildung der Fördereinrichtung umfasst die Position der jeweiligen Einheit auf der Fördereinrichtung. Optional ist die jeweilige Einheit mit ihrer Materialeigenschaft verknüpft.

In einer weiteren vorteilhaften Ausgestaltung der Erfindung umfasst die Vorrichtung eine zweite Analyseeinrichtung, wobei die zweite Analyseeinrichtung zur Analyse der jeweiligen Einheit des Schüttgutes auf die Materialeigenschaft hin ausgebildet ist, welche die Lagerstätte oder die Trennvorrichtung verlassen haben.

Die erste und die zweite Analysevorrichtung sind vorzugsweise gleichwirkend ausgebildet. Vorzugsweise wird die jeweilige Materialeigenschaft mit der gleichen Methode bestimmt. So sind die ermittelten Materialeigenschaften der jeweiligen Einheit vergleichbar.

Vorteilhaft ist die jeweilige Analyseeinrichtung nach der Trennvorrichtung oder nach der Lagerstätte angeordnet. Die zweite Analyseeinrichtung dient zur Analyse der Einheiten des Schüttgutes, welche von der Lagerstätte entnommen werden oder den Einheiten, welche von der Trennvorrichtung von weiteren Einheiten getrennt worden sind.

Die zweite Analyseeinrichtung kann zur Bestimmung derselben Materialeigenschaft wie die erste Analyseeinrichtung dienen. Optional kann mit Hilfe der zweiten Analyseeinrichtung eine weitere Materialeigenschaft bestimmt werden. Beispielhaft kann der Wassergehalt von Kohle bestimmt werden, welche auf einer Lagerstätte gelagert waren.

Vorzugsweise erfolgt anhand der abermaligen Bestimmung der Materialeigenschaft eine Verbesserung der Bewertung und der Nachverfolgung der jeweiligen Einheit.

Insbesondere mit Hilfe der zweiten Analyseeinrichtung können Fehler oder Ungenauigkeiten bei der Bewertung oder der Nachverfolgung erkannt werden.

Bei einer weiteren vorteilhaften Ausgestaltung der Erfindung ist der Steuereinrichtung eine Datenbank zugeordnet. Die Datenbank umfasst einen Eintrag der jeweiligen Einheit des Schüttgutes zusammen mit
- einer Position der jeweiligen Einheit in der Vorrichtung
- und/oder der jeweiligen Materialeigenschaft.

Mit Hilfe der Datenbank kann eine Einheit des Schüttgutes durch die gesamte Vorrichtung, d.h. entlang der jeweiligen Fördereinrichtung sowie in der Lagerstätte, nachverfolgt werden. Vorzugsweise erfolgt die Nachverfolgung dergestalt, dass die jeweilige Einheit mit Position in der Vorrichtung und der Materialeigenschaft einen Datensatz bilden. Die Position der jeweiligen Einheit passt sich vorzugsweise der Geschwindigkeit der Fördereinrichtung an.

In einer weiteren vorteilhaften Ausgestaltung der Erfindung umfasst die Datenbank weiter die virtuelle Nachbildung der Lagerstätte.

Vorzugsweise erfolgt die Nachverfolgung der jeweiligen Einheit des Schüttgutes mit Hilfe einer gemeinsamen Datenbank. Die Position der jeweiligen Einheit des Schüttgutes in der Lagerstätte ist demnach so lange im Wesentlichen konstant, solange sich die jeweilige Einheit des Schüttgutes in der Lagerstätte befindet.

In einer weiteren vorteilhaften Ausgestaltung der Erfindung ist der Lagerstätte eine Be- und/oder Entlade-Vorrichtung zugeordnet, wobei die virtuelle Nachbildung der Lagerstätte ein Bearbeitungsprofil der Lagerstätte umfasst und wobei anhand des Bearbeitungsprofils der Lagerstätte die Steuereinrichtung zur Steuerung der Be- und/oder Entladevorrichtung ausgebildet ist.

Das Bearbeitungsprofil der jeweiligen Lagerstätte umfasst vorzugsweise die Position der jeweiligen Einheit in der Lagerstätte, so dass die Entlade-Vorrichtung eine bestimmte Einheit aus der Lagerstätte entnehmen kann.

Das Profil der Lagerstätte dient vorzugsweise zur Ansteuerung der Be- und/oder Entlade-Vorrichtung, so dass die Be- und/oder Entlade-Vorrichtung die jeweilige Einheit des Schüttgutes an der Oberfläche der Lagerstätte aufnehmen oder abgeben kann.

Das Profil der Lagerstätte kann mit Hilfe eines physikalischen Modells berechnet werden. Alternativ oder zusätzlich kann die Oberfläche mit einem 2D-Sensor, einem 3D-Sensor oder einer Kamera bestimmt werden. Insbesondere bei einer Nachverdichtung, Witterungseinflüssen oder durch ein gelegentliches Abrutschen von Schüttgut in der Lagerstätte ist eine experimentelle Bestimmung des Profils der Lagerstätte vorteilhaft.

Die hier beschriebene Erfindung kann Anwendung in einer Mine, einer Hafenanlage, einer Schüttguthalde, einem Kraftwerk, einer industriellen Anlage, insbesondere in der Schwerindustrie, oder einem Kohlekraftwerk Einsatz finden. Darüber hinaus kann die hier beschriebene Vorrichtung ein Teil einer Hafenanlage, eines Materiallagers für Schüttgut oder einer Mine sein. Vorzugsweise findet die hier beschriebene Erfindung Anwendung im Bereich des Bergbaus oder der Erz-Gewinnung.

Im Folgenden wird die Erfindung anhand von Figuren näher beschrieben und erläutert. Die in den Figuren gezeigten Merkmale können fachmännisch zu neuen Ausführungsformen kombiniert werden. Die in den Figuren gezeigten Ausführungen und hier beschriebenen Ausführungen sind lediglich beispielhaft zu verstehen und schränken die Erfindung keinesfalls ein.

Es zeigen:
- FIG 1: eine Fördereinrichtung und eine Lagerstätte,
- FIG 2: ein mögliches Zusammenspiel von zwei Analyse-Einrichtungen,
- FIG 3: eine beispielhafte virtuelle Nachbildung einer Lagerstätte,
- FIG 4: eine Lagerstätte und zwei Analyse-Einrichtungen,
- FIG 5: eine beispielhafte Analyseeinrichtung sowie
- FIG 6: einen beispielhaften Einsatz einer Trennvorrichtung.

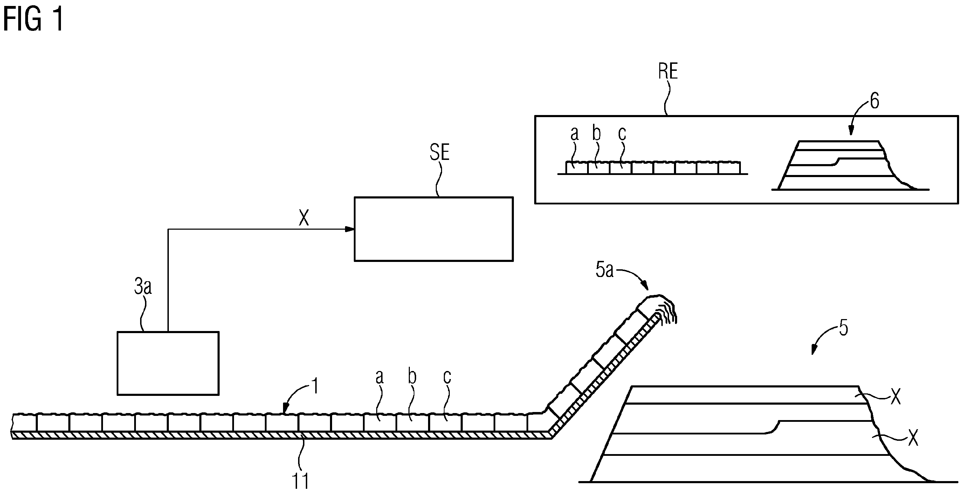

FIG 1 zeigt eine Fördereinrichtung 11 und eine Lagerstätte 5. Die Fördereinrichtung 11 dient zum Transport des Schüttgutes 1. Das Schüttgut 1 ist in Einheiten a, b, c unterteilt. Die Einheiten a, b, c des Schüttgutes 1 sind jeweils benachbart auf der Fördereinrichtung 11 angeordnet. Die jeweilige Einheit a, b, c des Schüttgutes 1 wird auf eine Materialeigenschaft X hin analysiert. Zur Bestimmung der Materialeigenschaft X des Schüttgutes 1 dient eine erste Analyseeinrichtung 3a. Die erste Analyseeinrichtung 3a dient zur Analyse der jeweiligen Einheit a, b, c des Schüttgutes auf der Fördereinrichtung. Die Fördereinrichtung 11 ist hier als Förderband bzw. als Gurtförderer ausgebildet. Die Fördereinrichtung 11 ist hier einer Belade-Vorrichtung 5a für eine Lagerstätte 5 zugeordnet.

Die Materialeigenschaft X der jeweiligen Einheit a, b, c wird einer Steuereinrichtung SE bereitgestellt. Der Steuereinrichtung SE ist eine Recheneinheit RE zugeordnet. Die Recheneinheit RE ist dazu ausgebildet, der jeweiligen Einheit a, b, c des Schüttgutes 1 die Materialeigenschaft X zuzuordnen. Die zugeordnete Materialeigenschaft X zu der jeweiligen Einheit a, b, c bildet die Grundlage für den Eintrag, die der jeweiligen Einheit a, b, c entspricht. Auf Grundlage der Datenbank 8 erfolgt die Bereitstellung einer virtuellen Nachbildung 6 der Fördereinrichtung 11 und/oder der Lagerstätte 5.

Die Einheiten a, b, c des Schüttgutes 1 werden in der Lagerstätte 5 abgelegt. Die Lagerstätte 5 ist hier als Halde ausgebildet. Der Lagerstätte 5 ist vorzugsweise in Bereiche eingeteilt, wobei der jeweilige Bereich Einheiten a, b, c des Schüttgutes 1 mit einer Materialeigenschaft X umfasst. Die Position der jeweiligen Einheit a, b, c auf der Fördereinrichtung 1 und/oder in der Lagerstätte 5 ist in der virtuellen Nachbildung 6 der Lagerstätte 5 bzw. der Fördereinrichtung 1 hinterlegt. Vorzugsweise umfasst die virtuelle Nachbildung 6 die Materialeigenschaft der jeweiligen Einheit X. Die Materialeigenschaft X der jeweiligen Einheit a, b, c kann auch zu Bereichen in der virtuellen Nachbildung 6 der Lagerstätte 5 zusammengefasst sein. Dies ist in der FIG durch die Abgrenzungen in der Lagerstätte 5 angedeutet.

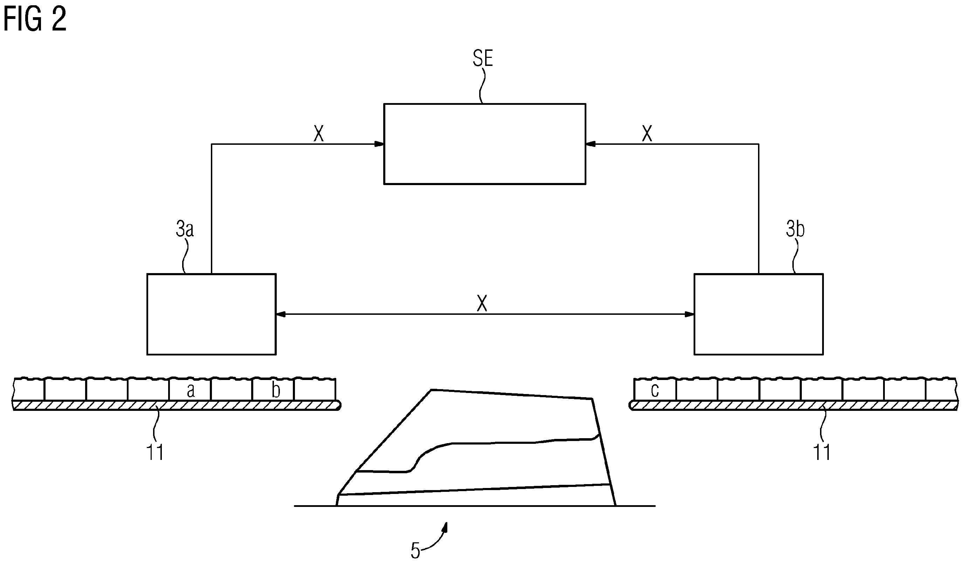

FIG 2 zeigt ein mögliches Zusammenspiel von zwei Analyseeinrichtungen 3a, 3b. Die erste Analyseeinrichtung 3a dient zur Bestimmung der Materialeigenschaft X der jeweiligen Einheit a, b, c des Schüttgutes 1 auf der Fördereinrichtung 11. Die erste Analyseeinrichtung 3a stellt die Materialeigenschaft X in Form eines Messergebnisses oder eines Signals S an die Steuereinrichtung SE bereit. Die jeweilige Einheit a, b, c des Schüttgutes 1 wird auf der Lagestätte 5 in der Mitte der beiden Fördereinrichtungen 11 abgelegt und später wieder aufgenommen. Die von der Lagerstätte 5 entnommenen Einheiten a, b, c werden von der zweiten Analyseeinrichtung 3b analysiert. Die zweite Analyseeinrichtung 3b stellt die Materialeigenschaft X der jeweiligen Einheit a, b, c des Schüttgutes 1 ebenfalls an die Steuereinrichtung SE bereit. Die Steuereinrichtung ist vorzugsweise dazu ausgebildet, die ihr zur Verfügung gestellten Materialeigenschaften X der jeweiligen Einheit a, b, c zu vergleichen. Durch diesen Vergleich kann die Genauigkeit der virtuellen Nachbildung 6 der Lagerstätte 5 und/oder der jeweiligen Fördereinrichtung 11 überprüft werden.

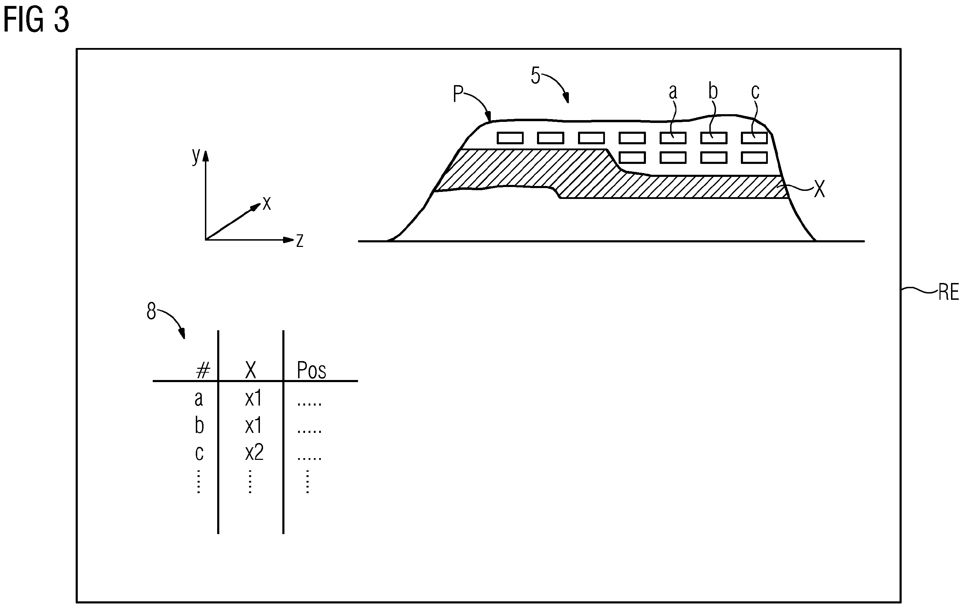

Die zweite Analyseeinrichtung 3b kann die Materialeigenschaft X der jeweiligen Einheit a, b, c auch als Vergleichsgröße an die erste Analyseeinrichtung 3a übermitteln. Die erste Analyseeinrichtung 3a kann mit dieser Überprüfung ihre Funktion verbessern. Beispielhaft ist der jeweiligen Analyseeinrichtung 3a, 3b ein selbstlernender Algorithmus zugeordnet. Der selbstlernende Algorithmus kann durch die Analyse von Einheiten mit einer bekannten Materialeigenschaft X trainiert werden. Die zweite Analyseeinrichtung 3b kann natürlich auch mit Hilfe von Materialeigenschaften X der jeweiligen Einheit a, b, c von der ersten Analyseeinrichtung verbessert werden. FIG 3 zeigt eine beispielhafte virtuelle Nachbildung 6 einer Lagerstätte 5. Die Lagerstätte 5 ist hier als Halde ausgebildet. Die virtuelle Nachbildung 6 der Lagerstätte 5 ist einmal als graphische Nachbildung (oben) und einmal als Datenbank (unten) symbolisiert. Die graphische Nachbildung umfasst auch das Bearbeitungsprofil P der Lagerstätte 5. Die Einheiten a, b, c sind in der Lagerstätte 5 benachbart angeordnet. Insbesondere Einheiten a, b, c mit gleichen oder ähnlichen Materialeigenschaften X sind benachbart angeordnet. Zur Positionierung der jeweiligen Einheit a, b, c, dienen die Raumrichtungen x, y, z in kartesischer Ausrichtung. Die Raumrichtungen x, y, z dienen darüber hinaus vorzugsweise zur Definition des Bearbeitungsprofils P. Das Bearbeitungsprofil P ist in einer einfachen Ausgestaltung als Oberflächenprofil der Lagestätte 5 ausgebildet.

In der Datenbank 8 als Darstellung der virtuellen Nachbildung 6 der Lagerstätte 5 umfasst ein Datensatz eine Einheit a, b, c mit einer Nummerierung #. Der jeweiligen Einheit x, y, z ist eine Materialeigenschaft X zugeordnet. Weiter ist der jeweiligen Einheit a, b, c die Position Pos in der Raumrichtung x, y, z zugeordnet. Bei einer Veränderung der Lagerstätte 5 durch Be- oder Entladen von Einheiten a, b, c des Schüttgutes oder einer Verdichtung wird die virtuelle Nachbildung 6 der Lagerstätte 5 vorzugsweise angepasst. Ebenso wird vorzugsweise das Bearbeitungsprofil P an die neue Form der Lagerstätte 5 angepasst.

Die virtuelle Nachbildung 6 der Lagerstätte 5 wird mit Hilfe einer Recheneinheit RE bereitgestellt. Die Recheneinheit RE weist vorzugsweise auch die dargestellte Datenbank 8 auf.

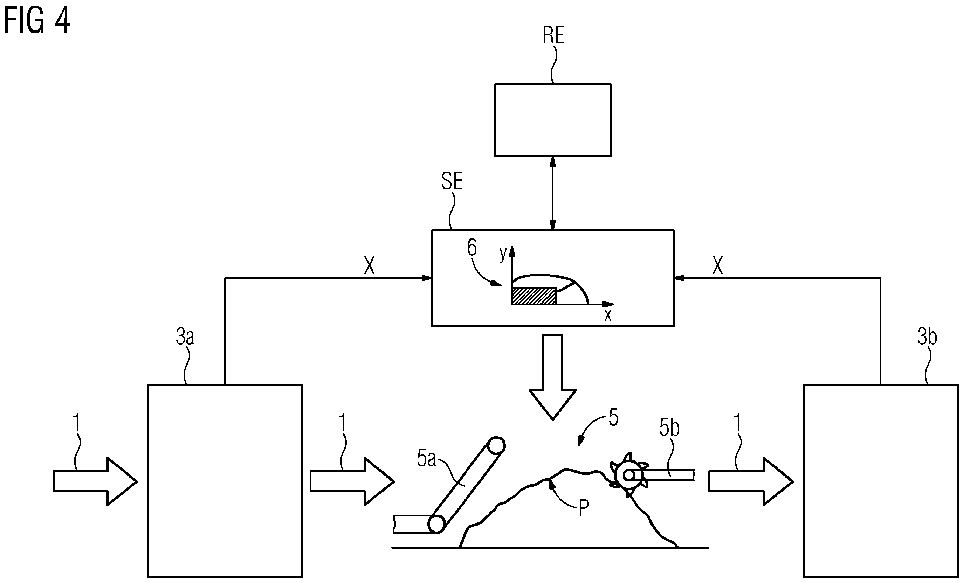

FIG 4 zeigt eine Lagerstätte 5 und zwei Analyseeinrichtungen 3a, 3b. Das Schüttgut 1 durchläuft eine erste Analyseeinrichtung 3a und wird auf der Lagerstätte 5 (zwischen-) gelagert. Das Schüttgut 1, welches von der Lagerstätte 5 entnommen wird, durchläuft eine zweite Analyseeinrichtung 3b. Der Lagerstätte 5 ist eine Beladevorrichtung 5a und eine Entnahme-Vorrichtung 5b zugeordnet. Die Verwendung eines Schaufelradbaggers kann die Belade-Vorrichtung 5a und die Entlade-Vorrichtung 5b in einem Gerät vereinen.

Die erste und zweite Analysevorrichtung 3a, 3b stellt jeweils die Materialeigenschaft X der jeweiligen Einheit a, b, c des Schüttgutes an die Steuereinrichtung SE bereit. Anhand der Materialeigenschaft X des Schüttgutes 1 wird eine virtuelle Nachbildung 6 der Lagerstätte 5 erstellt. Die Erstellung der virtuellen Nachbildung 5 erfolgt mit einer Recheneinheit RE, die der Steuereinrichtung SE zugeordnet ist. Die Steuereinrichtung dient zur Steuerung der Belade-Vorrichtung 5a und der Entlade-Vorrichtung 5b. Die Entlade-Vorrichtung 5b und optional die Belade-Vorrichtung 5a wird anhand des Bearbeitungsprofils P der Lagerstätte 5 gesteuert.

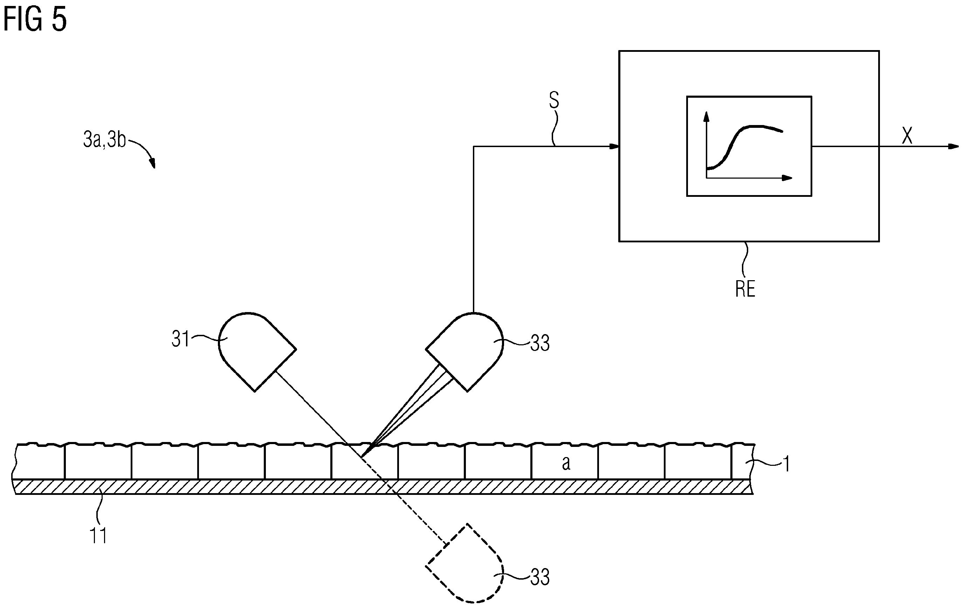

FIG 5 zeigt eine beispielhafte Analyseeinrichtung 3a, 3b. Die Analyseeinrichtung 3a, 3b umfasst eine Fördereinrichtung 11, auf der das Schüttgut 1 transportiert wird. Das Schüttgut 1 kann auch einer Einheit a zugeordnet sein. Das Schüttgut 1 wird mit einer Strahlungsquelle 31 mit elektromagnetischer Strahlung bestrahlt. Vorzugsweise ist die elektromagnetische Strahlung Röntgenstrahlung. Alternativ kann auch ein Partikel-Strahl, wie ein Neutronenstrahl, mit dem Schüttgut 1 wechselwirken. Das Schüttgut 1 absorbiert einen Teil Strahlung, transmittiert einen Teil der Strahlung und emittiert ggf. eine Fluoreszenz. Die transmittierte elektromagnetische Strahlung und/oder die reflektierte elektromagnetische Strahlung bzw. die Fluoreszenz wird mit einem Detektor 33 erfasst. Der Detektor 33 stellt ein Signal S an eine Recheneinheit RE bereit. Das Signal S weist vorzugsweise ein Messergebnis der Analyseeinrichtung 3a, 3b auf. Die Recheneinheit RE erstellt aus dem Signal S vorzugsweise ein Spektrum, beispielsweise ein Fluoreszenzspektrum, als Messergebnis. Anhand des Spektrums wir die Materialeigenschaft X des Schüttgutes 1 bzw. der jeweiligen Einheit a des Schüttgutes 1 bestimmt.

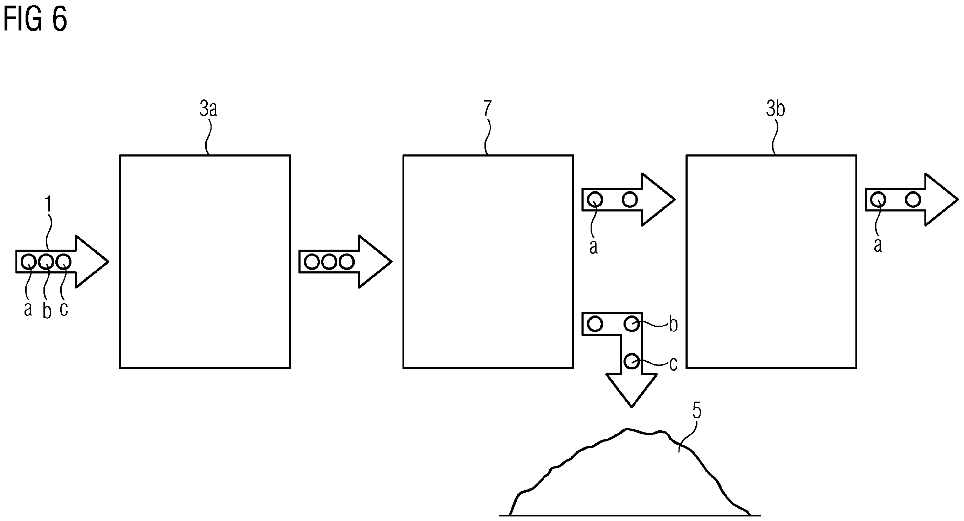

FIG 6 zeigt einen beispielhaften Einsatz einer Trennvorrichtung 7. Der Trennvorrichtung 7 werden Einheiten a, b, c von Schüttgut 1 bereitgestellt. Der jeweiligen Einheit a, b, c ist eine Materialeigenschaft X zugeordnet. Anhand der Materialeigenschaft X der jeweiligen Einheit a, b, c wird die Trennvorrichtung derart angesteuert, dass die Einheiten b, c, welche nicht einer zweiten Analyseeinrichtung 3b bereitgestellt werden, auf eine Lagerstätte 5, insbesondere einer Halde, zugeführt werden. Die andere Einheit a des Schüttgutes wird der zweiten Analyseeinrichtung 3b zugeführt. Diese Einheit a wird dann der weiteren Verarbeitung zugeführt. Beispielhaft ist die Halde für taubes Gestein vorgesehen und nur die Einheiten a von Schüttgut 1 mit einer bestimmten Materialeigenschaft X werden der weiteren Verarbeitung zugeführt.

Vorzugsweise umfasst ein Verfahren und eine Vorrichtung zur Bewertung und Nachverfolgung von Einheiten a, b, c eines Schüttgutes 1 folgende Merkmale:
- Die Einheiten a, b, c werden mit einer ersten Analyseeinrichtung 3a auf eine Materialeigenschaft X hin untersucht.
- Die Materialeigenschaft X wird jeweils der Einheit a, b, c zugeordnet.
- Mit Hilfe einer Recheneinheit RE können die Einheiten a, b, c auf der Fördereinrichtung 11 nachverfolgt werden.

Vorzugsweise erfolgt die Zuordnung der Materialeigenschaft X solange sich die jeweilige Einheit a, b, c auf der Fördereinrichtung 11 befindet. Anhand der Materialeigenschaft X erfolgt vorzugsweise eine Bewertung der jeweiligen Einheit a, b, c des Schüttgutes 1. Weiter können die Einheiten a, b, c des Schüttgutes 1 auf einer Lagerstätte 5 gelagert werden. Durch die Berechnung der Anordnung des Schüttgutes 1 in der Lagerstätte 5 kann der jeweiligen Einheit a, b, c eine Position in der Lagerstätte 5 zugeordnet werden. Anhand der jeweiligen Position der Einheit a, b, c kann eine virtuelle Nachbildung 6 der Lagerstätte 5 bereitgestellt werden. Alternativ oder zusätzlich kann eine Trennvorrichtung 7 zur Trennung der Einheiten a, b, c des Schüttgutes 1 vorgesehen sein. Vor der Bearbeitung oder einem weiteren Transport kann die jeweilige Einheit a, b, c des Schüttgutes 1 mit einer zweiten Analysevorrichtung 3b auf die Materialeigenschaft X hin analysiert werden. Die zweite Analyseeinrichtung 3b kann die ermittelte Materialeigenschaft X der ersten Analyseeinrichtung 3a bereitstellen. So kann die Funktionsweise der ersten Analyseeinrichtung 3a verbessert werden. Insbesondere durch den Einsatz eines Computerprogramms können die Bewertung und/oder das Nachverfolgen der jeweiligen Einheit a, b, c in Echtzeit erfolgen.

Zusammenfassend betrifft die Erfindung ein Verfahren und eine Vorrichtung zum Management von Einheiten a, b, c eines Schüttgutes 1 sowie ein Computerprogramm. Das Verfahren zum Management von Einheiten a, b, c des Schüttgutes 1 umfasst die folgenden Schritte:
- Ermitteln einer Materialeigenschaft X der jeweiligen Einheit a, b, c, insbesondere auf einer Fördereinrichtung 11,
- Hinterlegen eines Eintrages für die jeweilige Einheit a, b, c mit der jeweiligen Materialeigenschaft X der Einheit a, b, c und der Position der jeweiligen Einheit a, b, c in einer Datenbank 8,
weiter aufweisend zumindest einen der folgenden Schritte:
- Ermitteln eines nachgelagerten Transportweges der jeweiligen Einheit a, b, c auf Grundlage des jeweiligen Eintrages in der Datenbank 8,
- Anpassen einer nachfolgenden Bearbeitung der jeweiligen Einheit a, b, c auf Grundlage der Materialeigenschaft (X) der Einheit a, b, c,
- falls die jeweilige Einheit a, b, c einer Lagerstätte zugeführt wird, erstellen einer virtuellen Nachbildung 6 der Lagerstätte 5, wobei eine Position der jeweiligen Einheit a, b, c mit der jeweiligen Materialeigenschaft X in der Datenbank 8 hinterlegt wird.

## Patentansprüche

1. Verfahren zum Management von Einheiten eines Schüttgutes umfassend die folgenden Schritte:
- Ermitteln einer Materialeigenschaft (X) der jeweiligen Einheit (a, b, c), insbesondere auf einer Fördereinrichtung (11),
- Hinterlegen eines Eintrages für die jeweilige Einheit (a, b, c) mit der jeweiligen Materialeigenschaft (X) der Einheit (a, b, c) und der Position der jeweiligen Einheit (a, b, c) in einer Datenbank (8),
weiter aufweisend zumindest einen der folgenden Schritte:
- Ermitteln eines nachgelagerten Transportweges der jeweiligen Einheit (a, b, c) auf Grundlage des jeweiligen Eintrages in der Datenbank (8),
- Anpassen einer nachfolgenden Bearbeitung der jeweiligen Einheit (a, b, c) auf Grundlage der Materialeigenschaft (X) der Einheit (a, b, c),
- falls die jeweilige Einheit (a, b, c) einer Lagerstätte (5) zugeführt wird, erstellen einer virtuellen Nachbildung (6) der Lagerstätte (5), wobei eine Position der jeweiligen Einheit (a, b, c) mit der jeweiligen Materialeigenschaft (X) in der Datenbank (8) hinterlegt wird.

2. Verfahren nach Anspruch 1, wobei die Position der jeweiligen Einheit (a, b, c) in der Datenbank (8) mit Hilfe einer Geschwindigkeit der Fördereinheit (11) bestimmt wird.

3. Verfahren nach einem der Ansprüche 1 oder 2, wobei anhand des jeweilige Eintrages in der Datenbank (8) eine Trennvorrichtung (7) gesteuert wird, wobei die Trennvorrichtung (7) Einheiten (a, b, c) anhand der jeweiligen Materialeigenschaft (X) über eine erste Fördereinrichtung (11), insbesondere zur weiteren Verarbeitung, oder über eine weitere Fördereinrichtung (11), insbesondere zur Ablage auf einer Halde, trennt.

4. Verfahren nach einem der vorangehenden Ansprüche, wobei die Bestimmung der Materialeigenschaft (X) der jeweiligen Einheit (a, b, c) mittels einer ersten Analyseeinrichtung (3a) erfolgt, wobei die Bestimmung der Materialeigenschaft (X) der jeweiligen Einheit (a, b, c) auf/in der Fördereinrichtung (11) erfolgt.

5. Verfahren nach einem der vorangehenden Ansprüche, wobei die Zuordnung der Materialeigenschaft (X) zu der jeweiligen Einheit (a, b, c) erfolgt, während sich die jeweilige Einheit (a, b, c) auf der Fördereinrichtung (11) befindet.

6. Verfahren nach einem der vorangehenden Ansprüche, wobei die Zuordnung der Materialeigenschaft (X) und/oder der Bewertung zu der jeweiligen Einheit (a, b, c) in Echtzeit erfolgen.

7. Verfahren nach einem der vorangehenden Ansprüche, wobei eine Anzeige des Inhalts der Datenbank (6) und/oder der virtuellen Nachbildung (6) an einen Benutzer erfolgt.

8. Verfahren nach einem der vorangehenden Ansprüche, wobei anhand der virtuellen Nachbildung (6) der Lagerstätte (5) ein Bearbeitungsprofil (P) der Lagerstätte (6) ermittelt wird, wobei anhand des Bearbeitungsprofils (P) eine Be- und/oder Entlade-Vorrichtung (5a, 5b) angesteuert wird.

9. Verfahren nach einem der vorangehenden Ansprüche, wobei die Bestimmung der Materialeigenschaft (X) der jeweiligen Einheit (a, b, c) mit Hilfe eines selbstlernenden Algorithmus erfolgt.

10. Verfahren nach einem der vorangehenden Ansprüche, wobei die Materialeigenschaft (X), zumindest eines Teils der Einheiten (a, b, c), erneut an einer zweiten Position ermittelt wird.

11. Verfahren nach einem der vorangehenden Ansprüche, wobei die virtuelle Nachbildung (6) der Lagerstätte (5) nach der Entnahme von einer Einheit (a, b, c) aktualisiert wird.

12. Verfahren nach einem der vorangehenden Ansprüche, wobei die von der Lagerstätte (5) entnommene Einheit (a, b, c) anhand einer virtuellen Nachbildung (6) der Fördereinrichtung (11) nachverfolgt wird.

13. Verfahren nach einem der vorangehenden Ansprüche, wobei zumindest ein Teil der Schritte des Verfahrens nach einem der vorangehenden Ansprüche mit Hilfe zumindest eines Prozessors zumindest einer Recheneinheit (RE) erfolgt.

14. Computerprogramm zur Durchführung eines Verfahrens nach einem der Ansprüche 1 bis 12, wobei das Computerprogramm auf zumindest einer Recheneinheit (RE) mit Hilfe von zumindest einem Prozessor ausführbar ist, wobei dem Computerprogramm eine Datenbank (8) zugeordnet ist, wobei das Computerprogramm die Einträge in der Datenbank (8) erstellt und/oder aktualisiert.

15. Vorrichtung zum Management von Einheiten (a, b, c) eines Schüttgutes (1), umfassend eine Fördereinrichtung (11), zumindest eine erste Analyseeinrichtung (3a, 3b) sowie eine Steuereinrichtung (SE), wobei die Steuereinrichtung (SE) zur Durchführung eines Verfahrens nach einem der Ansprüche 1 bis 13 ausgebildet ist.
